Europäisches Patentamt

European Patent Office

Office européen des brevets

(19)

(11) Veröffentlichungsnummer: **0 489 368 A1**

## (12) EUROPÄISCHE PATENTANMELDUNG

(21) Anmeldenummer: **91120542.5**

(22) Anmeldetag: **29.11.91**

(51) Int. Cl.5: **F16L 37/28**

(30) Priorität: **05.12.90 DE 4038718**

(43) Veröffentlichungstag der Anmeldung:
**10.06.92 Patentblatt 92/24**

(84) Benannte Vertragsstaaten:
**AT BE CH DE ES FR GB IT LI NL**

(71) Anmelder: **ROBERT VON KEITZ KG**
**Am Grenzweg Postfach 376**
**W-6250 Limburg(DE)**

(72) Erfinder: **Von Keitz, Robert**
**Parkstr. 33**
**W-6250 Limburg(DE)**

(74) Vertreter: **Wolf, Günter, Dipl.-Ing.**
**Postfach 70 02 45 An der Mainbrücke 16**
**W-6450 Hanau 7(DE)**

(54) **Trennbares Doppelventil.**

(57) Das trennbare Doppelventil besteht aus zwei in Öffnungsstellung molchbaren Ventilen (1, 1') mit Stellhebeln (2, 2') zur Betätigung der in den mit Bajonettkupplungselementen (3) durch Drehung verbindbaren Ventilgehäusen (4, 4') angeordneten Schließelemente (5). Um mit einfachen Mitteln ein Entkoppeln der beiden Ventile (1, 1') bei noch gegebener Öffnungsstellung der Ventile (1, 1') zu blockieren, ist das Doppelventil nach der Erfindung derart ausgebildet, daß die Stellhebel (2, 2') der beiden zusammengekoppelten Ventile (1, 1') mit parallel orientierten, aber in entgegengesetzte Richtungen weisenden Sperrarmen (7, 8) versehen sind, die in Öffnungsstellung der Stellhebel (2, 2') die Anschlußseite des jeweils anderen Ventiles (1, 1') überragen. Der Sperrarm (7) des einen Ventils (1) ist dabei derart gegen dessen Gehäuse (4) hin abgekröpft, daß dieser in Schließstellung das andere Ventilgehäuse (4') gegen eine Entkopplungsverdrehung blockiert und der ungekröpfte Sperrarm (8) des Stellhebels (2') des anderen Ventiles (1') erst zu schließen ist, wenn sich der Stellhebel (2) mit seinem abgekröpften Sperrarm (7) in Schließstellung befindet.

FIG.8

Die Erfindung betrifft ein trennbares Doppelventil gemäß Oberbegriff des Patentanspruches 1.

Ein trennbares Doppelventil der gattungsgemäßen Art ist bspw. nach der DE-A- 38 44 322 bekannt, für das handelsübliche Kugelhahnventile verwendet werden können, die auf der gegenseitigen Anschlußseite lediglich einer wenig aufwendigen Anpassung bedürfen, um die Ventile druck- und flüssigkeitsdicht per Bajonettverschluß durch Drehung zusammenfügen zu können Um ein unerwünschtes Lösen bzw. Trennen der beiden Ventilteile zu verhindern, sind im Kopplungsbereich in der Regel Verrastungselemente vorgesehen, die jedoch nur bedingt Sicherheit gegen ein unerwünschtes Lösen bzw. Trennen der beiden Ventile bieten. Außerdem ist beim Doppelventil nach der obengenannten DE-A-35 44 322 mit besonderen Einrichtungen dafür gesorgt, daß im gekoppelten Zustand die Schließelemente (Kugeln mit molchbaren Durchlaßöffnungen) nur gemeinsam geöffnet bzw. geschlossen werden können. Dafür sind im Bereich der Stellhebel in aufwendiger Weise verzahnte Stellstücke vorgesehen oder Schnurzugverbindungen. Abgesehen davon, daß derartige Kopplungseinrichtungen nicht im unmittelbaren Funktionszusammenhang mit der Bajonettverdrehsicherung stehen und auch abgesehen von der mit verzahnten Stellstücken verbundenen Fingerverletzungsgefahr, stellen derartige Kopplungselemente für das gemeinsame Öffnen und Schließen beider Ventile eine gewisse Handhabungsschwierigkeit dar, die einem schnellen Koppeln und Entkoppeln der beiden Ventile entgegensteht.

Der Erfindung liegt demgemäß die Aufgabe zugrunde, ein trennbares Doppelventil der gattungsgemäßen Art dahingehend zu verbessern, daß mit einfachsten Mitteln einerseits die beiden Ventile in Öffnungsstellung gegen eine unbeabsichtigte Trennung gesichert sind und die Öffnung der beiden Ventile nur nacheinander vollzogen werden kann und zwar mit der Maßgabe, daß dafür die gleichen Elemente dienen, die auch die Trennungssicherung übernehmen.

Diese Aufgabe ist mit einem trennbaren Doppelventil der gattungsgemäßen Art nach der Erfindung durch die im Kennzeichen des Patentanspruches 1 angeführten Merkmale gelöst. Vorteilhafte Weiterbildungen ergeben sich nach den Unteransprüchen.

Bei einem Doppelventil nach der DE-A - 1 054 792 sind die gestellten Forderungen zwar auch erfüllt, aber abgesehen davon, daß hierfür keine handelsüblichen Kugelhahneinzelventile benutzt werden können, wird dies durch eine besondere Schräg- und Schiebeflächenausbildungerkauft, was bedeutet, daß nicht einmal die beiden Ventile identisch ausgebildet sein können. Für eine aufeinanderfolgende Öffnung und Schließung der Ventile sind mit Kurvenausnehmungen versehene Sperrscheiben vorgesehen, die aber keine Sicherungsfunktion bezüglich der Kopplung der beiden Ventile miteinander übernehmen können.

Im Gegensatz dazu sind beim erfindungsgemäßen Doppelventil lediglich zwei zusätzliche Sperrnasen an den Ventilstellhebeln vorgesehen, die einerseits in der entscheidenden Öffnungsstellung eine unbeabsichtigte Trennung der beiden Ventile nicht mehr zulassen und die andererseits so ausgebildet und angeordnet sind, daß die Ventile nur nacheinander geöffnet bzw. in umgekehrter Reihenfolge nacheinander geschlossen werden können, wobei für das beabsichtigte Trennen der beiden Ventile Voraussetzung ist, daß beide Ventile geschlossen sind. Die Sicherheit gegen unbeabsichtigtes Trennen der beiden geöffneten Ventile einerseits und auch der durch die erfindungsgemäße Sperrmechanik vorgegebene Zwang, die Ventile erst trennen zu können, wenn diese geschlossen sind, ist aber eine wesentliche Forderung, die an Leitungstransporte von Flüssigkeiten gestellt werden muß, wenn Leitungsenden mittels derartiger Doppelventile gekoppelt werden sollen oder wenn eine Leitung mit einem Ventil an ein entsprechend ausgebildetes Behälterventil angekoppelt werden soll, da sonst beträchtliche Umweltschäden auftreten können.

Die erfindungsgemäßen, zusätzlichen Sperrarme, die im Bereich der Schwenkachsen der Schließelemente die zusätzlichen Sicherheitselemente bilden, können dabei in bezug auf die Stellhebel als separate Sperrelemente auf den Stellwellen der Schließelemente verdrehfest aufgesteckt und fixiert sein. Es ist aber auch möglich, die Stellhebel mit ihren zugehörigen Sperrarmen aus einem entsprechenden Blechzuschnitt durch Prägeverformung einstückig auszubilden.

Sofern die beiden Einzelventile an ihren Anschlußendbereichen zylindrisch sein sollten, was auch möglich ist, muß natürlich dafür gesorgt werden, daß der Sperrarm einen Anschlag findet, der aber bei einem zylindrischen Ventilende nicht gegeben ist. In einem solchen Falle muß im betreffenden Sperrbereich ein separater Anschlag geeigneter Form vorgesehen und in geeigneter Weise angebracht werden. Bevorzugt wird allerdings eine Ausführungsform derart, daß der in Öffnungsstellung beider Ventile unter dem abgekröpften Teil des betreffenden Sperrarmes befindliche Anschlag in Form eines (in Durchflußrichtung gesehen) im wesentlichen quadratischen Flansches ausgebildet ist. Dabei ist darauf hinzuweisen, daß handelsübliche Einzelventile in der Regel von vornherein derartige Anschlußflansche aufweisen. Da solche handelsüblichen Ventile normalerweise aber an ihren Anschlußseiten nicht mit Bajonettanschlußelementen ausgestattet sind, sondern einer einfachen Umbildung im Sinne des Doppelventiles gemäß eingangs erwähnter DE-OS-38 44 322 bedürfen, bezieht sich die Maßgabe der Anordnung eines im wesentlichen quadratischen Flansches insbesondere auf eine quadratische Flanschausbildung des an der Anschlußseite des betreffenden Ventiles anzubringenden Bajonettelementes.

Das erfindungsgemäße Doppelventil wird nachfolgend anhand der zeichnerischen Darstellung eines Ausführungsbeispieles näher erläutert.

Es zeigt schematisch

Fig. 1, 2     Draufsichten auf die beiden, das Doppelventil bildenden Einzelventile in Schließstellung;

Fig. 3, 4     Seitenansichten der beiden Einzelventile gemäß Fig. 1, 2;

Fig. 5, 6     Ansichten der beiden Einzelventile jeweils von der Anschlußseite her gesehen;

Fig. 7     Draufsichten auf die beiden Einzelventile in Öffnungsstellung, bei der die beiden Ventile entgegen der Darstellung jedoch zusammengekoppelt sein müssen und

Fig. 8     die beiden Einzelventile gemäß Fig. 7 im zusammengekoppelten Zustand und in Öffnungsstellung.

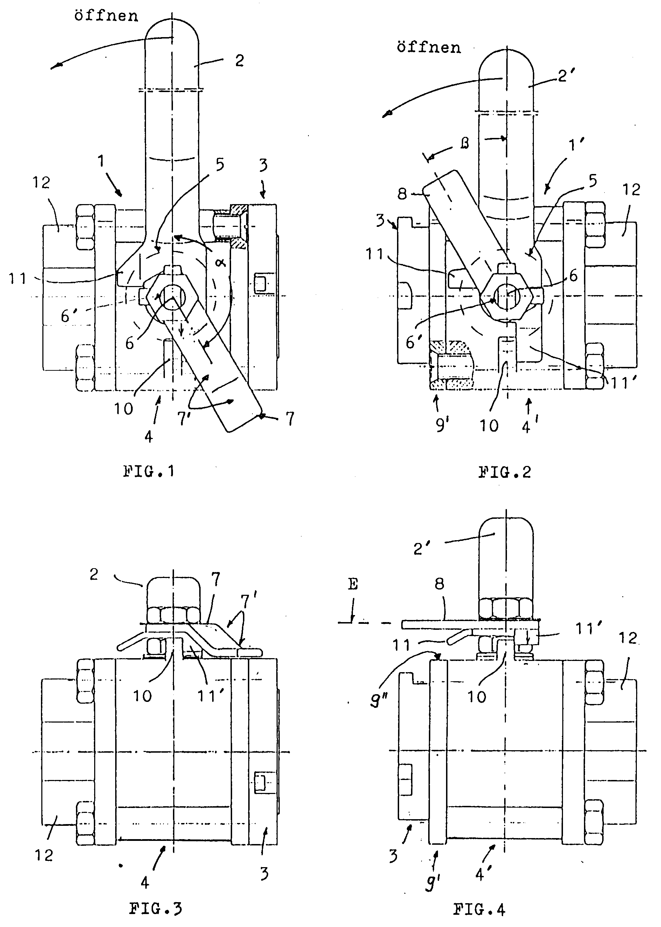

Das trennbare Doppelventil besteht aus zwei in Öffnungsstellung molchbaren Ventilen 1, 1' mit Stellhebeln 2, 2' (Handgriffe) zur Betätigung der in den mit Bajonettkupplungselementen 3 durch Drehung verbindbaren Ventilgehäusen 4, 4' angeordneten Schließelemente 5, die in den Fig. 1, 2 gestrichelt dargestellt und bspw. als Kugeln mit je einem Durchgangskanal (nicht dargestellt) ausgebildet sind. Handelsübliche Ventile dieser Art weisen dabei in der Regel beidseitig Sechskantverschraubungselemente 12 mit Innengewinde auf. Um solche handelsüblichen Ventile als Schnellkupplungsventile auszubilden, sind die Sechskantanschlußstücke 12 soweit wie möglich einfach abgedreht und durch ringförmige Bajonettkupplungselemente 3 ersetzt, was aber hier im einzelnen keiner näheren Erläuterung bedarf.

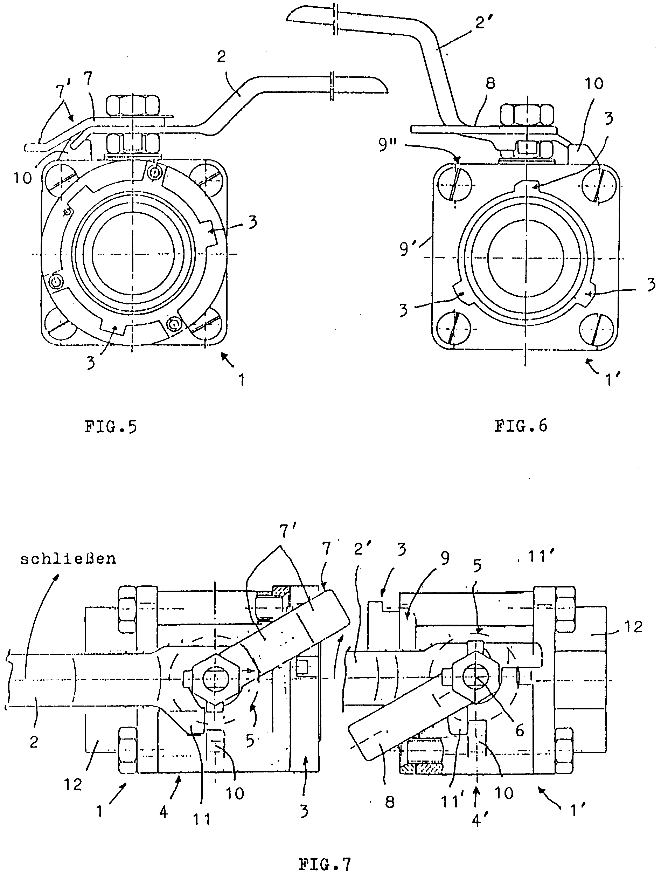

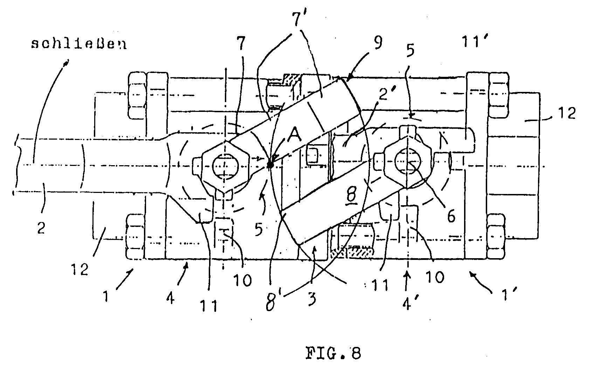

Beim aus solchen Einzelventilen gemäß Fig. 1, 2 gebildete trennbare Doppelventil ist der Stellhebel 2 des einen Ventils 1 im Bereich seiner Schwenkachse 6 mit einem Sperrarm 7 versehen, der mit dem Stellhebel 2 einen stumpfen Winkel α bildet und gegen das andere Ventilgehäuse 4' gerichtet ist. Der Stellhebel 2' des anderen Ventils 1' ist ebenfalls im Bereich seiner Schwenkachse 6 mit einem Sperrarm 8 versehen, der mit dem Stellhebel 2 einen spitzen Winkel β einschließt und ebenfalls gegen das andere Ventilgehäuse gerichtet ist. Wie aus Fig. 1, 2 ersichtlich, aber auch aus Fig. 7, 8, weisen die Stellhebel 2, 2' und auch die Sperrarme 7, 8 sowohl in Schließ- als auch in Öffnungsstellung beider Ventile 1, 1' im wesentlichen jeweils in parallele Richtung, d.h., bezüglich der Sperrarme 7, 8 heißt dies genauer, daß diese zwar parallel sind, aufgrund ihrer Winkelzuordnung zu den Stellhebeln aber in entgegengesetzte Richtung weisen. In Öffnungsstellung (Fig. 7, 8) beider Ventile 1, 1' steht der Sperrarm 7 des einen Stellhebels 2 im Stellweg des Sperrarmes 8 des anderen Stellhebels 2', wobei der eine Sperrarm 7 zum Ventilgehäuse 4 hin abgekröpft ist und sich mit seiner Abkröpfung 7' unterhalb der Stellebene E des anderen Sperrarmes 8 erstreckt. Ferner ist für die Sperrfunktion gegen ein unbeabsichtigtes Trennen beider Ventile wesentlich, daß in Öffnungsstellung beider Ventile 1, 1' (siehe Fig. 7, 8) die Abkröpfung 7' des Sperrarmes 7 über einem Anschlag 9 des anderen Ventilgehäuses 4 stehend angeordnet ist.

Um die Öffnungs- und Schließstellungen der Schließelemente 5 mittels der Stellhebel 2, 2' zu definieren, weisen die Ventilgehäuse Anschläge 10 auf und die Stellhebel 2, 2' entsprechende Anschläge 11, 11' mit ( in der dargestellten Anordnung) einem Öffnungs- bzw. Schließweg von 90°. Da die Sperrarme 7, 8 ebenfalls fest auf den Stellwellen 6' der Schließelemente 5 sitzen, bzw., wie vorerwähnt, mit den Stellhebeln 2, 2' einstückig ausgebildet sein können, bewegen sich die Sperrarme 7, 8 beim dargestellten Ausführungsbeispiel ebenfalls bei Verstellung um 90° und gelangen dabei aus der Schließstellung gemäß Fig. 1, 2 in die Öffnungsstellung gemäß Fig. 7, bei der die beiden Ventile 1, 1' jedoch gemäß Fig. 8 tatsächlich zusammengekoppelt sind, wobei im zusammengekoppelten Zustand die Enden der Sperrarme 7, 8 dem jeweiligen Anschlußbereich des anderen Ventiles, wie in Fig. 8 dargestellt, übergreifen. Da der Sperrarm 7, wie vorerwähnt, nach unten gegen das Ventilgehäuse 4 abgekröpft ist und zwar im Sinne der Fig. 3, 5, befindet sich das untere Ende der Abkröpfung 7' in unmittelbarer Nähe über dem Anschlag 9 bzw. über der betreffenden Flanke 9'' des Flansches 9', so daß dieser bzw. das betreffende Ventil 1' in bezug auf das Ventil 1 nicht mehr verdreht werden kann, d.h., in Öffnungsstellung der Ventile bzw. der Stellhebel 2, 2' gemäß Fig. 7, die in gleicher Richtung orientiert sind, können sich die beiden Ventile nicht mehr selbsttätig voneinander lösen. Eine Trennung der beiden Ventile 1, 1' ist erst wieder dann möglich, wenn die Stellhebel 2, 2' in Schließstellung gemäß der Fig. 1, 2 gebracht sind, da sich dann das abgekröpfte Teil 7' des Sperrarmes 7 nur noch über dem eigenen Ventilgehäuse 4 befindet.

Nach dem Zusammenkoppeln der beiden Ventile, was in Schließstellung gemäß Fig. 1, 2 erfolgt, wird zunächst der Stellhebel 2' mit seinem Sperrarm 8 in Öffnungsstellung gemäß Fig. 7 gebracht, bei welcher Stellung das Ventil 1 zwar noch etwas geschwenkt, aber schon nicht mehr entkoppelt werden kann, da dies der Sperrarm 8 verhindert. In dieser Stellung kann nun der Stellhebel 2 mit dem abgekröpften Sperrarm 7 unter dem Sperrarm 8 hindurch in die Öffnungsstellung gemäß Fig. 7 gebracht werden, wobei das untere Ende der Abkröpfung 7' in geringer Distanz über dem Anschlag 9 zu stehen kommt, wodurch die noch vorher mögliche Schwenkung des Ventiles 1 praktisch ebenfalls gänzlich ausgeschlossen wird. Da für den Schließvorgang des Ventiles 1' der Sperrarm 7 dem Sperrarm 8 im Wege steht, bzw. das Ende des Sperrarmes 8 bei einer Schließbewegung im achsnahen Bereich am Sperrarm 7 bei A (siehe Fig. 8) anschlägt, kann der Schließvorgang der beiden Ventile nur in umgekehrter Reihenfolge vorgenommen werden, d.h., zunächst muß der Stellhebel 2 mit dem Sperrarm 7 in Schließstellung gedreht werden und dann der Stellhebel 2' mit dem Sperrarm 8 nachfolgend. Die Anordnungsebene E des Sperrarmes 8 muß natürlich so vorgesehen und die Abkröpfung 7' am Sperrarm 7 muß so ausgebildet sein, daß bei versehentlicher Schließbewegung des Stellhebels 2' und noch offenem Ventil 1 die Ecke 8' des Sperrarmes 8 am Ansatz 7'' der Abkröpfung 7' des sich noch in Öffnungsstellung befindlichen Sperrarmes 7 anschlägt, also das Ventil 1' nicht geschlossen werden kann. Bei gleich langen Sperrarmen 7, 8, wie dargestellt, ist dafür jedoch Voraussetzung, daß der stumpfe Winkel $\alpha$ nicht 135 und der spitze Winkel $\beta$ nicht 45° betragen darf, sondern der Winkel $\beta < 45°$ und der Winkel $\alpha > 135°$ sein muß. Bei 45°- bzw. 135°-Winkelstellungen der Sperrarme 7, 8 ließen sich nämlich die Sperrarme in beiden Richtungen aneinander vorbeischwenken und jedes Ventil könnte unabhängig vom anderen geöffnet werden.

**Patentansprüche**

1. Trennbares Doppelventil, bestehend aus zwei in Öffnungsstellung molchbaren Ventilen (1, 1') mit Stellhebeln (2, 2') zur Betätigung der in den mit Bajonettkupplungselementen (3) durch Drehung verbindbaren Ventilgehäusen (4, 4') angeordneten Schließelemente (5),
**dadurch gekennzeichnet,**
daß die Stellhebel (2, 2') der beiden zusammengekoppelten Ventile (1, 1') mit parallel orientierten, aber in entgegengesetzte Richtungen weisenden Sperrarmen (7, 8) versehen sind, die in Öffnungsstellung der Stellhebel (2, 2') die Anschlußseite des jeweils anderen Ventiles (1, 1') überragen, wobei der Sperrarm (7) des einen Ventils (1) gegen dessen Gehäuse (4) hin derart abgekröpft ist, daß dieser in Schließstellung das andere Ventilgehäuse (4') gegen eine Entkopplungsverdrehung blockiert und der ungekröpfte Sperrarm (8) des Stellhebels (2') des anderen Ventiles (1') erst zu schließen ist, wenn sich der Stellhebel (2) mit seinem abgekröpften Sperrarm (7) in Schließstellung befindet.

2. Doppelventil nach Anspruch 1,
**dadurch gekennzeichnet,**
daß der Stellhebel (2) des einen Ventils (1) an seiner Schwenkachse (6) mit dem Sperrarm (7) versehen ist, der mit dem Stellhebel (2) einen stumpfen Winkel $\alpha$ bildet und gegen das andere Ventilgehäuse (4') gerichtet ist,
daß der Stellhebel (2') des anderen Ventils 1') an seiner Schwenkachse (6) mit dem Sperrarm (8) versehen ist, der mit dem Stellhebel (2') einen spitzen Winkel $\beta$ einschließt und gegen das andere Ventilgehäuse (4) gerichtet ist, wobei sowohl in Schließ- als auch in Öffnungsstellung beider Ventile (1, 1') deren Stellhebel (2, 2') in die gleiche Richtung und die Sperrarme (7, 8) jeweils parallel, aber in entgegengesetzte Richtung weisen;
daß der abgekröpfte Sperrarm (7) sich mit seiner Abkröpfung (7') unterhalb der Stellebene (E) des anderen Sperrarmes (8) erstreckt;
daß in Öffnungsstellung beider Ventile (1, 1') der Sperrarm (7) des einen Stellhebels (2) im Schließstellweg des Endes des anderen Sperrarmes (8) steht, und
daß in Öffnungsstellung beider Ventile (1, 1') die Abkröpfung (7') des Sperrarmes (7) über einem Anschlag (9) des anderen Ventilgehäuses (4') stehend angeordnet ist.

3. Doppelventil nach Anspruch 1 oder 2,
**dadurch gekennzeichnet,**
daß die Sperrarme (7, 8) als separate Sperrelemente auf den Stellwellen (6') der Schließelemente (5) verdrehfest aufgesteckt und dort zusammen mit den Stellhebeln (2, 2') fixiert sind.

4. Doppelventil nach Anspruch 1 oder 2,
**dadurch gekennzeichnet,**
daß die Stellhebel (2, 2') mit ihren zugehörigen Sperrarmen (7, 8) aus einem Stück gebildet sind.

5. Doppelventil nach einem der Ansprüche 2 bis 4,
**dadurch gekennzeichnet,**
daß der in Öffnungsstellung beider Ventile (1, 1') unter der Abkröpfung (7') des Sperrarmes (7) befindliche Anschlag (9) des Ventilgehäuses (4'), in Durchflußrichtung gesehen, in Form eines im wesentlichen quadratischen Flansches (9') ausgebildet ist.

FIG.1

FIG.2

FIG.3

FIG.4

FIG.5

FIG.6

schließen

FIG.7

FIG. 8

Europäisches
Patentamt

**EUROPÄISCHER RECHERCHENBERICHT**

Nummer der Anmeldung

EP    91 12 0542

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 566 489 (KNAPP  ET AL.)<br>* das ganze Dokument *<br>--- | 1 | F16L37/28 |
| A,D | DE-A-3 844 322 (ROBERT VON KEITZ KG.)<br>* das ganze Dokument *<br>--- | 1 | |
| A,D | DE-C-1 054 792 (NEUE ARGUS)<br>* das ganze Dokument *<br>----- | 1 | |
| | | | **RECHERCHIERTE SACHGEBIETE (Int. Cl.5 )**<br><br>F16L<br>F16K |

Der vorliegende Recherchenbericht wurde für alle Patentansprüche erstellt

| Recherchenort | Abschlußdatum der Recherche | Prüfer |
|---|---|---|
| DEN HAAG | 26 FEBRUAR 1992 | BUDTZ-OLSEN A. |

EPO FORM 1503 03.82 (P0403)